# DEMANDE DE BREVET EUROPEEN

(11) **EP 0 824 044 A1**
(43) Date de publication de la demande: **18.02.1998**
(21) Numéro de dépôt: 97420143.6
(22) Date de dépôt: 11.08.1997
(51) Int. Cl.: B09B 3/00, C08K 11/00, C08L 95/00

(54) **Procédé de stabilisation-solidification des résidus d'incinération des déchets urbains ou industriels et installation pour sa mise en oeuvre**

(30) Priorité: 14.08.1996 FR 9610316
(71) Demandeur: GIE CYLERGIE, F-92000 Nanterre (FR)
(72) Inventeur: Drouadaine, Ivan, 69130 Ecully (FR); Pascual, Christophe, 69008 Lyon (FR); Troesch, Olivier, 75019 Paris (FR)
(74) Mandataire: Thibault, Jean-Marc

(57) **Abrégé**

L'objet de l'invention concerne un procédé de traitement des résidus d'incinération des déchets urbains ou industriels par leur mélange à une température donnée avec un liant organique (**L**) consistant :
- à homogénéiser les résidus à traiter,
- à pratiquer une analyse chimique des résidus afin de déterminer au moins leur fraction soluble et leur teneur en eau,
- à alimenter en continu une extrudeuse (**E**) par un liant organique (**L**) et les résidus (**R**) selon une proportion déterminée en fonction, notamment, de la valeur de la fraction soluble des résidus,
- à assurer, par l'extrudeuse (**E**), le malaxage du mélange résidus-liant à une température de malaxage prédéterminée en fonction, notamment, de la teneur en eau des résidus, de manière à permettre l'enrobage des résidus par le liant organique,
- et à évacuer de l'extrudeuse (**E**), le mélange ainsi formé afin de le placer dans une alvéole.

## Description

La présente invention concerne le domaine technique de la stabilisation-solidification des résidus de l'incinération des déchets urbains ou industriels.

L'élimination des déchets urbains ou industriels est un problème délicat à résoudre en raison, d'une part, de l'augmentation rapide du volume des déchets et, d'autre part, des normes strictes liées à l'environnement rendant de plus en plus difficile l'élimination des déchets par dépôt en centre d'enfouissement technique (C.E.T.). Pour assurer leur élimination, les déchets urbains sont en grande partie traités par incinération. Toutefois, l'incinération des déchets produit des résidus solides se présentant essentiellement sous forme de mâchefers d'incinération et de Résidus d'Epuration des Fumées d'Incinération des Ordures Ménagères (REFIOM). Ces derniers résidus se présentent généralement sous une forme finement divisée.

Les résidus produits par l'incinération des déchets doivent être stockés en décharges classées. Les résidus d'épuration des fumées, qui constituent des déchets ultimes, doivent être stockés qu'après stabilisation physique ou chimique des polluants qu'ils contiennent. Une telle stabilisation doit également intervenir pour les résidus issus de procédés de production d'électricité ou de chaleur ou de divers procédés industriels (résidus d'épuration des fumées d'incinération de déchets industriels ou REFIDI) qui présentent sensiblement les mêmes caractéristiques physiques et chimiques que les REFIOM.

Diverses réglementations existent pour imposer un traitement à ces résidus avant stockage ayant pour objectif principal de réduire la fraction soluble des résidus et de conférer également aux produits traités des résistances mécaniques facilitant leur gestion dans les centres de stockage.

L'état de la technique a proposé un premier type de procédé pour traiter les résidus d'incinération des déchets urbains ou industriels en utilisant des liants hydrauliques pour la stabilisation de ces résidus. Un tel procédé prévoit d'utiliser des réactifs tels que des ciments dans une proportion de 40 à 85 % du poids des résidus à traiter. Une quantité au moins équivalente d'eau est ajoutée pour la prise des ciments. Ces impératifs nécessaires au respect des seuils de fraction solubles des déchets stabilisés entraînent une forte augmentation du poids de produits à déposer en centres de stockage et une faible diminution du volume des résidus traités. De plus, certains produits contenus dans les résidus à traiter, et particulièrement les sels de chlorure, imposent l'utilisation de grandes quantités de réactifs, ce qui rend ce type de procédé peu économique dans certains cas, comme pour le traitement des résidus issus de procédés secs, semi-secs ou semi-humides d'épuration des fumées et, plus généralement, de tous les déchets fortement salins.

L'état de la technique a proposé, notamment par la demande de brevet FR 2 471 265, un deuxième type de traitement visant à introduire les résidus dans un liant hydrocarboné liquide ou pâteux en vue d'un malaxage, puis d'un refroidissement. La fraction soluble du produit stabilisé est ainsi réduite par enrobage. Il s'avère ainsi que la quantité de réactif nécessaire à la stabilisation-solidification des résidus est moins importante que pour les procédés au liant hydraulique. Ce procédé nécessite toutefois la mise en oeuvre d'un liant hydrocarboné dans une proportion supérieure à 30 % du poids de résidus à traiter, ce qui représente néanmoins, un ajout important de réactif. Par ailleurs, ce procédé nécessite un malaxage à une température élevée et pendant une durée relativement longue, ce qui entraîne une altération prématurée des liants.

Il est connu, par ailleurs, des procédés de traitement par vitrification des résidus. Les produits obtenus par ces procédés, appelés vitrifiats, présentent une fraction soluble très faible répondant largement aux seuils réglementaires. Toutefois, ces procédés génèrent des fumées qui doivent être traitées. Ce traitement produit donc des résidus solides secondaires et, par ailleurs, les sels non vitrifiables contenus initialement dans les résidus ne peuvent pas être incorporés dans le vitrifiat. Ces produits secondaires du traitement par vitrification doivent donc être traités à leur tour par un autre type de procédé. De plus, la vitrification nécessite, dans tous les cas, des températures très élevées engendrant des coûts énergétiques importants.

L'objet de l'invention vise à résoudre les divers inconvénients des procédés de traitement décrits ci-dessus en offrant un procédé de traitement des résidus d'incinération des déchets urbains ou industriels, adapté pour nécessiter une faible quantité de réactifs par rapport aux résidus traités et pour obtenir un produit final présentant une fraction soluble totale faible et aucun résidu solide secondaire.

Pour atteindre cet objectif, le procédé selon l'invention consiste :
- à homogénéiser les résidus à traiter,
- à pratiquer une analyse chimique des résidus afin de déterminer au moins leur fraction soluble et leur teneur en eau,
- à alimenter en continu une extrudeuse par un liant organique et les résidus selon une proportion déterminée en fonction, notamment, de la valeur de la fraction soluble des résidus,
- à assurer par l'extrudeuse, le malaxage du mélange résidus-liant à une température de malaxage prédéterminée en fonction, notamment, de la teneur en eau des résidus, de manière à permettre l'enrobage des résidus par le liant organique,
- et à évacuer de l'extrudeuse, le mélange ainsi formé afin de le placer dans une alvéole.

Un autre objectif de l'invention est de proposer un procédé de traitement des résidus d'incinération adapté pour permettre de conférer au produit final une résistance mécanique améliorée.

Pour atteindre cet objectif, le procédé selon l'invention consiste :
- à ajouter au liant organique des agents modifiants dans une proportion déterminée en fonction de la valeur de la fraction soluble,
- et à malaxer à une température de malaxage, le liant organique et les agents modifiants, en vue d'assurer une dispersion optimale des agents modifiants dans le liant.

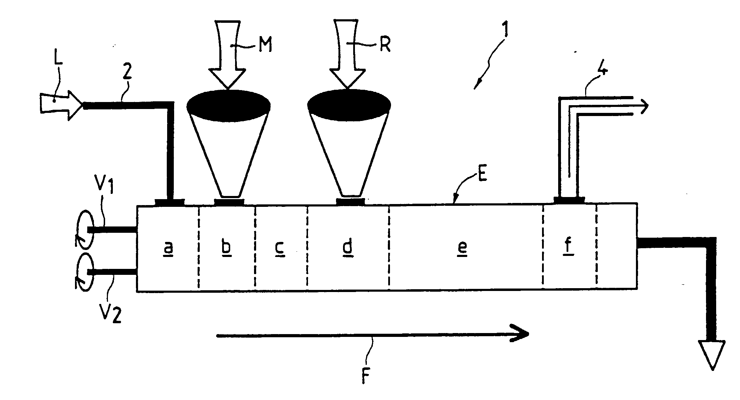

Diverses autres caractéristiques ressortent de la description faite ci-dessous en référence au dessin annexé qui montre, à titre d'exemple non limitatif, une forme de réalisation et de mise en oeuvre de l'objet de l'invention.

La **fig. unique** est une représentation schématique d'une installation **1** de mise en oeuvre de l'invention permettant de traiter des résidus d'incinération des déchets urbains ou industriels **R** à l'aide d'un enrobage par l'intermédiaire d'un liant organique **L**. Il doit être considéré que l'objet de l'invention vise à traiter les résidus d'incinération des déchets urbains ou industriels, décrits ci-dessus et appelés REFIOM ou REFIDI. Il est à noter que l'objet de l'invention permet de traiter, en tant que déchets industriels, les suies de combustion de fioul lourd.

L'installation selon l'invention comprend une extrudeuse **E** du type, de préférence mais non exclusivement, à deux vis corrotatives **v**_{**1**}**, v**_{**2**}. L'extrudeuse **E** comporte un conduit **2** d'alimentation en continu du liant organique **L** qui se trouve ainsi convoyé dans l'extrudeuse selon un sens de cheminement représenté par la flèche **F**. Par exemple, le liant organique peut être constitué soit par :
- un bitume, c'est-à-dire un résidu lourd de distillation,
- un bitume incluant aussi au moins un agent **M** modifiant le bitume, cet agent **M** pouvant être, suivant la composition des résidus à traiter, soit des polymères neufs ou de recyclage, comme par exemple des EVA, SBS ou caoutchoucs de recyclage, soit des produits hydrauliques rigidifiant la matrice du bitume,
- un polymère considéré majoritaire dans le liant et obtenu à partir de matières plastiques recyclées.

De préférence, le bitume utilisé est un bitume d'enrobage routier de classe 10/20 (classé suivant la norme NF T 66 004).

Le conduit d'alimentation du liant organique **2** débouche dans l'extrudeuse selon une zone **a** de prise en charge et de convoyage du liant organique **L**. Dans le cas où le liant organique est destiné à contenir des agents modifiants **M**, la zone a de prise en charge comporte également des moyens de chauffage du liant à une température déterminée **t**_{**1**} comprise entre 150 et 250 °C dont la valeur sélectionnée dépend de la qualité du liant et des agents modifiants. La zone de prise en charge a est suivie, selon le sens de progression **F**, par une zone **b** d'introduction des agents **M** modifiant le bitume. Les agents modifiants **M** sont ajoutés au liant organique dans une proportion déterminée en fonction de la valeur de la fraction soluble des résidus **R**. Ainsi, plus la fraction soluble est importante, plus des agents modifiants sont ajoutés. L'ajout des agents modifiants **M** permet de conférer une bonne stabilité mécanique au produit final obtenu, notamment, par l'adjonction de polymère au bitume. L'ajout de produits hydrauliques au bitume est avantageux lorsque le bitume présente un caractère trop souple ou trop mou.

L'extrudeuse **E** comporte, en aval de la zone d'introduction **b**, selon le sens de progression **F**, une zone **c** assurant le malaxage du bitume et des agents modifiants à la température **t**_{**1**}, afin d'obtenir une dispersion optimale des agents modifiants à l'intérieur de la matrice du liant organique. Il est à noter que dans l'exemple illustré, le malaxage du liant et des agents modifiants est réalisé avantageusement par l'intermédiaire de l'extrudeuse. Il n'est pas à exclure que le malaxage puisse être effectué par des moyens classiques appropriés différents d'une extrudeuse. Dans ce cas, l'extrudeuse serait directement alimentée par le liant **L** incluant les agents modifiants **M**.

L'extrudeuse **E** comporte, en aval de la zone de malaxage **c**, une zone **d** d'introduction des résidus **R** qui préalablement ont été homogénéisés principalement vis-à-vis des paramètres de teneur en eau et de fraction soluble. Les résidus **R** se présentent sous une forme pâteuse ou de fines particules de granulométrie inférieure à 2 mm. Préalablement à leur introduction dans l'extrudeuse, le procédé selon l'invention prévoit de réaliser des analyses chimiques des résidus **R**, de manière à connaître au moins leur fraction soluble et leur teneur en eau.

L'introduction des résidus **R** dans l'extrudeuse est réalisée de manière à limiter au maximum l'avalement d'air. Selon une caractéristique de l'invention, la quantité de liant organique ajoutée aux résidus **R** est comprise entre 10 et 50 % et, de préférence, entre 15 et 30 % en poids du mélange résidus-liant organique.

Conformément au procédé selon l'invention, la proportion de liant organique **L**, ajoutée aux résidus **R**, est fonction de la valeur de la fraction soluble des résidus **R**. Plus la fraction soluble est importante, plus la quantité de liant à utiliser est élevée pour garantir un comportement stable du matériau final.

De plus, pour des résidus **R** présentant une faible fraction soluble, par exemple inférieure à 25 %, il peut être prévu d'utiliser un liant organique **L** pur n'incluant pas d'agents modifiants **M**. Pour des résidus **R** présentant une fraction soluble importante, par exemple supérieure à 25 %, des agents modifiants M sont ajoutés, de préférence, au liant organique **L**. Les agents modifiants **M** reprennent ainsi les tensions crées par la fraction soluble enrobée à chaud et présente dans le produit final. Ces agents modifiants **M** évitent la fissuration du produit final.

L'extrudeuse **E** comporte, en aval de la zone d'introduction **d**, une zone **e** de chauffage-malaxage assurant le malaxage du mélange liant-résidus à une température donnée **t**_{**2**} pour obtenir l'enrobage des résidus par le liant organique. La température **t**_{**2**} est comprise entre 150 et 250 °C et la valeur sélectionnée dépend de la teneur en eau des résidus à traiter. Ainsi, plus la teneur en eau des résidus est importante, plus la température **t**_{**2**} est élevée. Cette température **t**_{**2**} est un compromis entre, d'une part, la nature du bitume et des agents modifiants, qui imposent des valeurs de températures basses et, d'autre part, la nature du malaxage qui est améliorée pour des valeurs de températures hautes.

Selon une caractéristique avantageuse de l'invention, la zone de chauffage-malaxage **e** assure une action mécanique de cisaillement des résidus **R**. L'extrudeuse **E** est ainsi conçue pour assurer, simultanément, l'enrobage et la modification, par action mécanique, de la géométrie des particules constitutives des résidus **R**. Une telle modification permet d'obtenir un bon arrangement des particules entre elles dans le produit final, autorisant ainsi une réduction de la quantité de liant **L** nécessaire pour l'obtention d'un solide compact.

La zone de chauffage-malaxage **e** est suivie par une zone **f** de dégazage du mélange ainsi obtenu. Dans l'exemple illustré, l'extrudeuse **E** comporte ainsi un puits de dégazage **4**. Il est à noter que la zone de dégazage **f** pourrait être constituée par une zone extérieure à l'extrudeuse, telle qu'une chambre prolongeant l'extrudeuse.

Après dégazage, le mélange ainsi formé, appelé aussi mastic, est évacué de l'extrudeuse à la pression ambiante, afin d'être placé dans des alvéoles. Il peut être prévu d'assurer l'écoulement par gravité du mastic dans des moules appropriés. Après refroidissement, les blocs obtenus par démoulage sont, ensuite, transférés en C.E.T.. Il peut être aussi envisagé de transférer à chaud, le mastic directement dans les alvéoles du C.E.T.

L'installation **1** telle que décrite ci-dessus permet d'assurer la mise en oeuvre d'un procédé de traitement en continu des résidus d'incinération des déchets urbains ou industriels. Un tel procédé permet d'assurer, par la mise en oeuvre d'une extrudeuse, un enrobage particulièrement efficace des résidus avec un pourcentage de liant organique limité, comme le démontrent les exemples suivants.

Les exemples qui suivent montrent l'application du procédé de traitement selon l'invention à des déchets, tels que des REFIOM de qualités très différentes représentant l'extrême de la plage de variation de compositions de ce type de déchets. Les REFIOM de type A sont issus d'un traitement de fumée de type "sec" ayant une fraction soluble élevée (CaCl₂, CaO, CaSO₄...), tandis que les REFIOM de type B sont issus d'un traitement de fumée type "humide" à fraction soluble plus faible (NaCl, KCl, CaSO₄...). Les exemples décrits dans l'**Annexe I** présentent les résultats de caractérisation de REFIOM faites à l'aide du test de lixiviation normalisé AFNOR NF X 31-210 et quelques tests mécaniques. L'évaluation de la qualité de la solification/stabilisation est réalisée à l'aide du test de lixiviation normalisé AFNOR NF X 31-211 pour produits solidifiés et le test CAED (Capacité d'Absorption en Eau Dynamique) jugeant de la résistance à moyen terme de la qualité du traitement (test résultant des travaux du LCPAE de l'INSA de Lyon : *"Etude du couple matrice-déchets/réactifs solifiant vis-à-vis de la lixiviation",* 1991). Les caractéristiques physiques des REFIOM A et B sont les suivantes :

| | |
|---|---|
| Masses volumique réelles | - REFIOM A : 2,3 g/cm³ |
| | - REFIOM B : 2,4 g/cm³ |
| Masse volumique apparente | - REFIOM A et B : 0,5 à 0,7 t/m³ |

Granulométrie (voie sèche, par tamisage) : voir les courbes granulométriques ci-dessous.

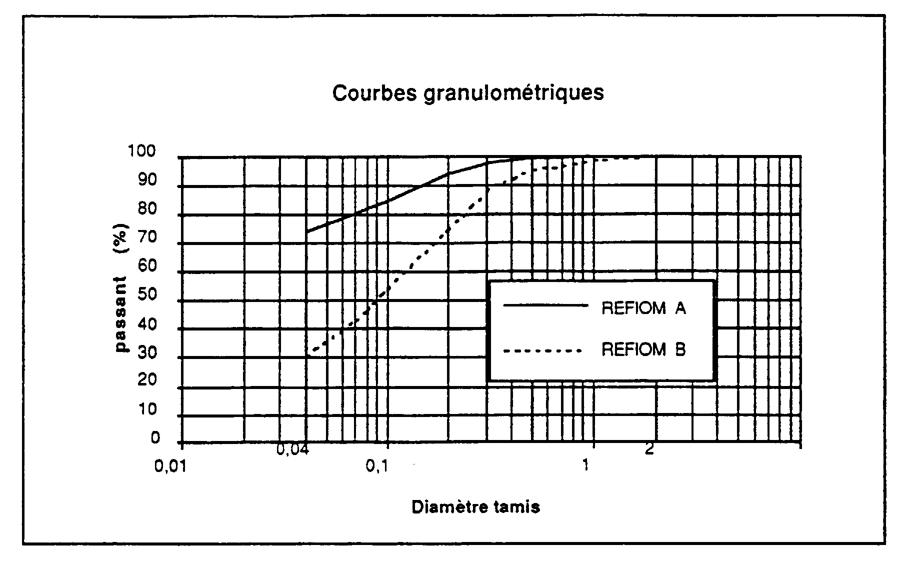

L'**Annexe II** permet de mettre en évidence les caractéristiques des REFIOM de type A, après la mise en oeuvre du procédé de traitement conforme à l'invention. Ce traitement a été réalisé avec un taux de bitume très faible pour montrer les performances du procédé selon l'invention.

Les paramètres de traitement sont :
- Taux de bitume 10/20 selon NF T 66 004: 10 %,
- Température de malaxage de 200 °C,
- Vitesse de rotation des vis : 600 tours/minute.

La densité du produit stabilité /solidifié est de 1,3 t/m³ environ.

Les caractéristiques chimiques montrées dans l'**Annexe II** sont réalisées selon le test AFNOR NF X 31-211. L'analyse des caractéristiques chimiques après traitement, permet de constater un abattement de la fraction soluble d'un facteur 10, tandis que la quantité de métaux lixiviée est inférieure aux limites de détection des méthodes utilisées, sauf pour le plomb. Ce dernier élément est relargué à hauteur de 14,66 mg/kg à comparer à la limite supérieure de dépôt en C.E.T. de 50 mg/kg. Cet exemple est réalisé aux limites basses du procédé (10 % de liant, pas d'agent modifiant) sur un déchet très agressif et les résultats des tests environnementaux sont conformes à la réglementation pour l'acceptation en C.E.T..

L'**Annexe III** est un tableau faisant apparaître les caractéristiques chimiques des REFIOM de type B obtenues selon le test AFNOR NF X 31-211 après la mise en oeuvre du procédé de traitement selon l'invention. Deux types de traitement (Traitement 1 et Traitement 2) ont été effectués avec des taux de bitume différents pour montrer différentes qualités de stabilisation possibles.

Les paramètres du Traitement 1 sur les REFIOM B sont les suivants :
- Taux de liant : 25,2 %,
- Température de malaxage : 170 °C,
- Vitesse de rotation des vis : 600 tours/minute.

Les paramètres du traitement 2 sur les REFIOM B sont les suivants :
- Taux de liant : 19 %,
- Température de malaxage : 200 °C,
- Vitesse de rotation des vis : 600 tours/minute.

La densité du produit stabilisé/solidifié après traitement est de 1,4 t/m³ environ dans les deux cas.

L'**Annexe III** permet de constater que les fractions solubles obtenues sur les déchets stabilisés, suivant les deux traitements, sont très faibles (comparées au seuil de 10 % réglementaire pour le dépôt en C.E.T.), tandis que les quantités de métaux lixiviées sont inférieures aux limites de détection, sauf pour le plomb qui est très faiblement relargué (0,65 et 0,80 mg/kg). Ces deux exemples de traitement montrent la qualité de la stabilisation pour des formules économiquement réalisables. Il est à remarquer que le niveau de stabilisation est très sensiblement supérieur, à quantité de réactif comparable, à la stabilisation par liants hydrauliques.

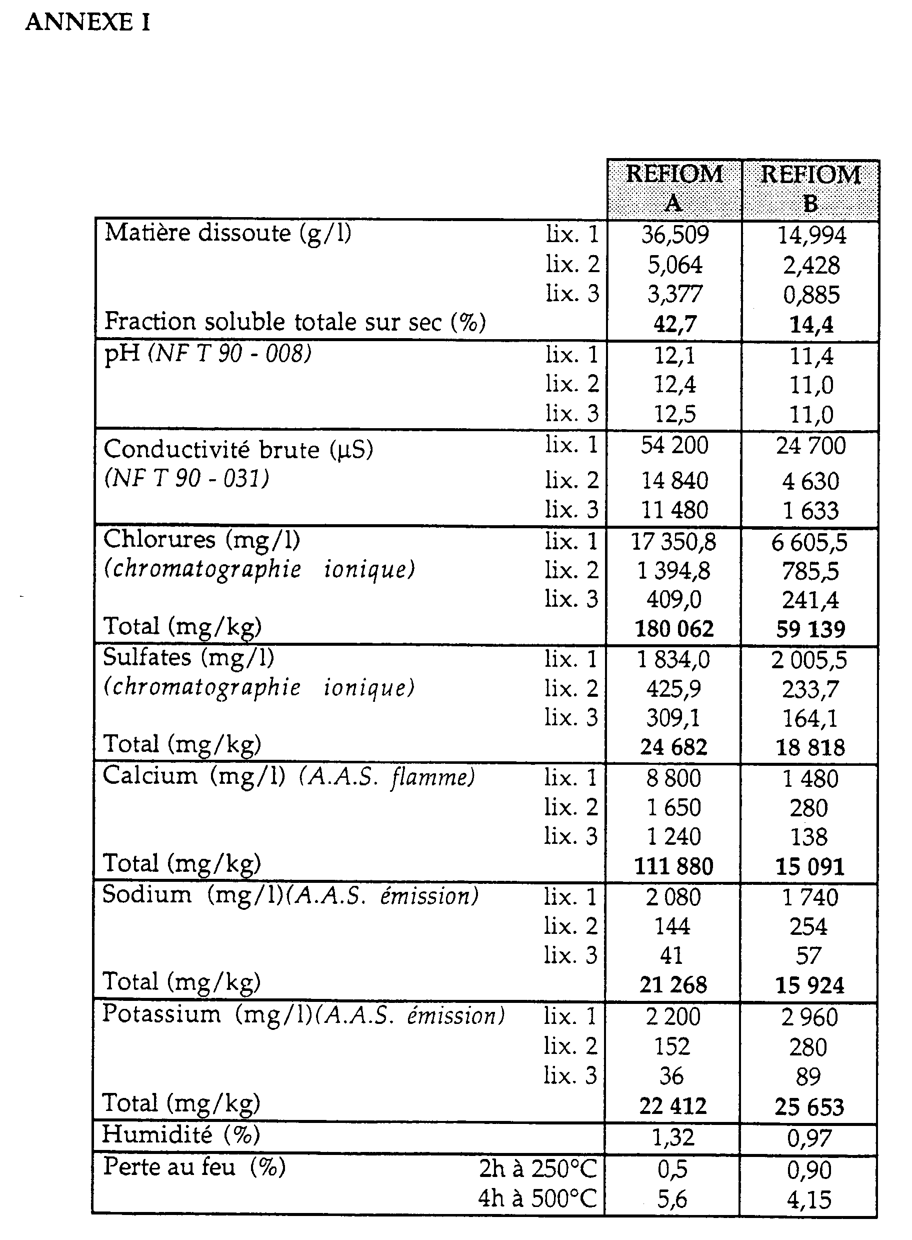

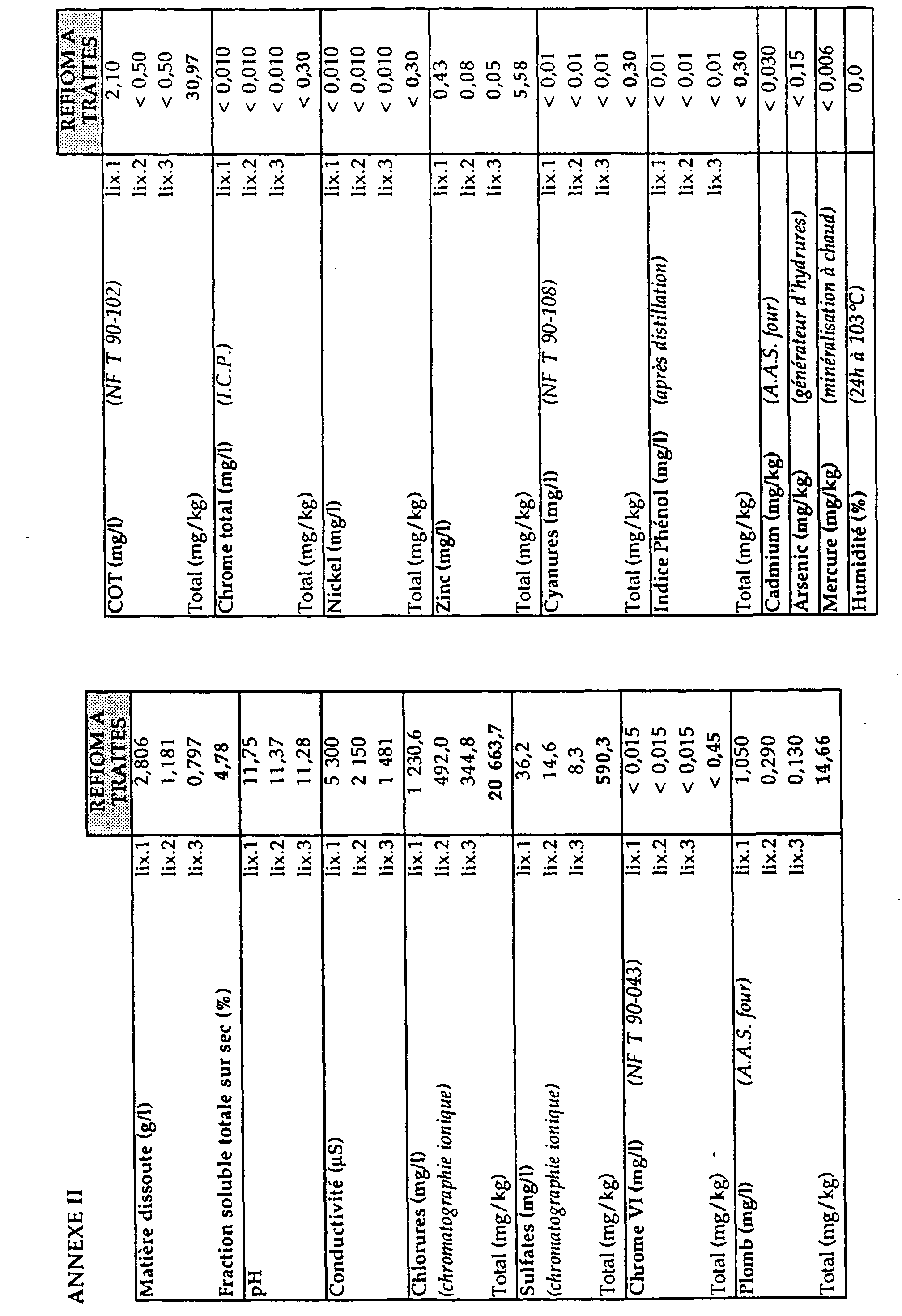

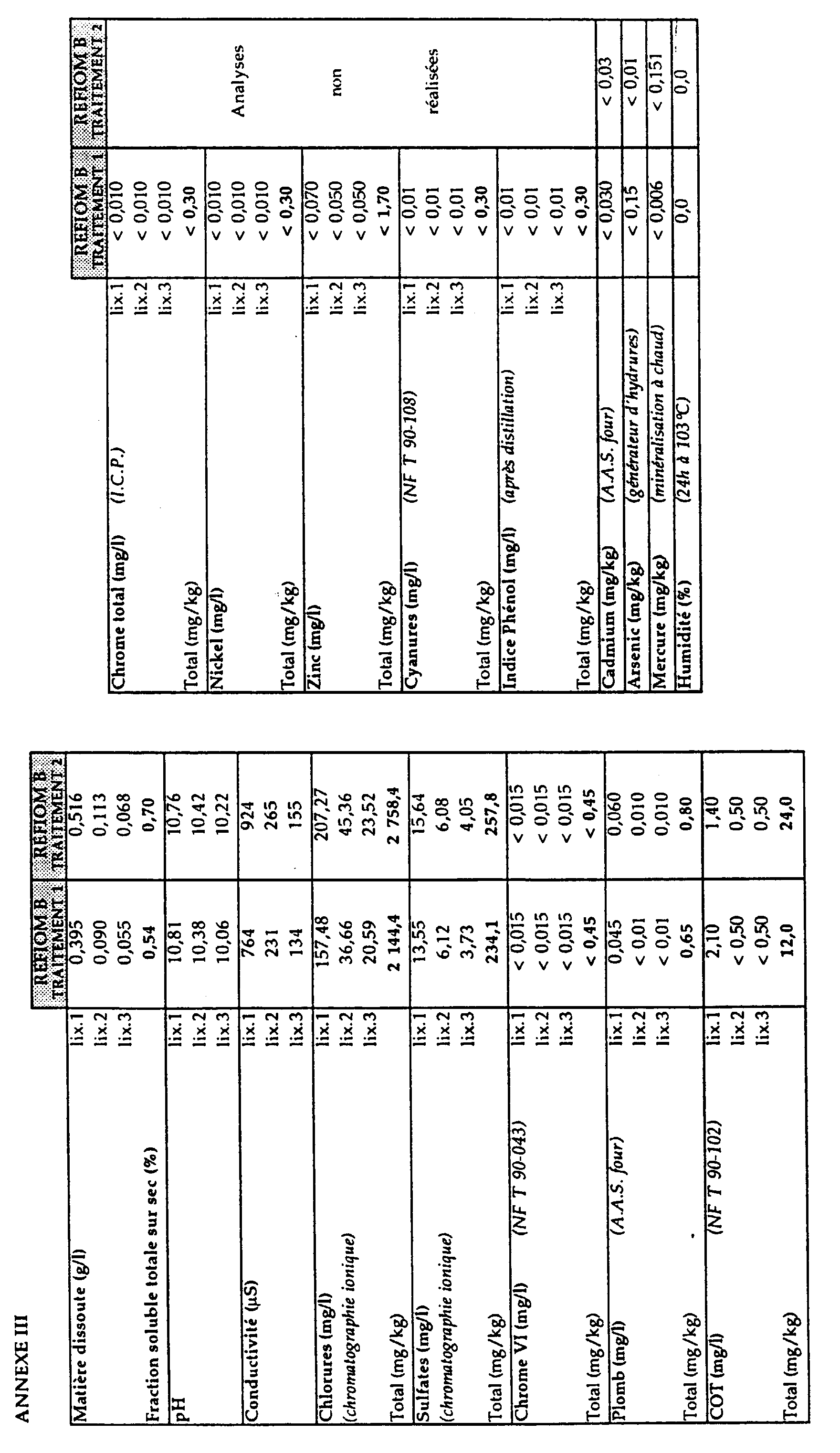

## Revendications

1. Procédé de traitement des résidus (**R**) d'incinération des déchets urbains ou industriels par leur mélange à une température donnée avec un liant organique (**L**), caractérisé en ce qu'il consiste :
- à homogénéiser les résidus à traiter,
- à pratiquer une analyse chimique des résidus afin de déterminer au moins leur fraction soluble et leur teneur en eau,
- à alimenter en continu une extrudeuse (**E**) par un liant organique (**L**) et les résidus (**R**) selon une proportion déterminée en fonction, notamment, de la valeur de la fraction soluble des résidus,
- à assurer, par l'extrudeuse (**E**), le malaxage du mélange résidus-liant à une température de malaxage (**t**_{**2**}) prédéterminée en fonction, notamment, de la teneur en eau des résidus, de manière à permettre l'enrobage des résidus par le liant organique,
- et à évacuer de l'extrudeuse (**E**), le mélange ainsi formé afin de le placer dans une alvéole.

2. Procédé selon la revendication 1, caractérisé en ce qu'il consiste :
- à ajouter au liant organique (**L**) des agents modifiants (**M**) dans une proportion déterminée en fonction de la valeur de la fraction soluble,
- et à malaxer à une température de malaxage (**t**_{**1**}), le liant organique et les agents modifiants, en vue d'assurer une dispersion optimale des agents modifiants dans le liant.

3. Procédé selon les revendications 1 et 2, caractérisé en ce qu'il consiste à malaxer à l'aide de l'extrudeuse (**E**), les agents modifiants (**M**) et le liant organique (**L**) qui a été chauffé à la température de malaxage (**t**_{**1**}) préalablement à l'introduction dans l'extrudeuse des agents modifiants.

4. Procédé selon la revendication 1, caractérisé en ce qu'il consiste, après le malaxage du mélange résidus-liant, à assurer le dégazage du mélange obtenu.

5. Procédé selon la revendication 1, caractérisé en ce qu'il consiste à assurer l'évacuation du mélange de l'extrudeuse (**E**) par coulée gravitaire.

6. Procédé selon la revendication 1, caractérisé en ce qu'il consiste à assurer le malaxage du liant organique avec les agents modifiants et du mélange résidus-liant à une température comprise entre 150 et 250 °C.

7. Procédé selon la revendication 1 ou 6, caractérisé en ce qu'il consiste à assurer, par l'extrudeuse (**E**), le malaxage du mélange résidus-liant et le cisaillement des résidus (**R**).

8. Procédé selon la revendication 1, caractérisé en ce qu'il consiste à ajouter aux résidus une quantité de liant organique comprise entre 10 et 50 % et, de préférence, entre 15 et 30 % en poids du mélange résidus-liant organique.

9. Procédé selon l'une des revendications 1 à 8, caractérisé en ce que le liant organique est un bitume.

10. Installation pour la mise en oeuvre d'un procédé de traitement selon l'une des revendications précédentes, comprenant une extrudeuse comportant :
- un conduit d'alimentation (**2**) en continu d'un liant organique (**L**),
- une entrée d'alimentation en continu des résidus (**R**),
- et une zone de chauffage-malaxage,
caractérisée en ce que l'extrudeuse (**E**) comprend :
- en amont de l'entrée d'alimentation des résidus, une zone (**a**) de chauffage du liant organique à une première température donnée (**t**_{**1**}), suivie par une zone de malaxage (**c**) du liant organique avec des agents modifiants, à la première température donnée (**t**_{**1**}),
- et une zone de chauffage-malaxage (**e**) placée en aval du conduit (**2**) et de l'entrée d'alimentation des résidus, par rapport au sens d'avancement (**F**), afin d'assurer le malaxage du mélange liant-résidus à une deuxième température donnée (**t**_{**2**}) pour obtenir l'enrobage des résidus par le liant organique.

11. Installation selon la revendication 10, caractérisée en ce que l'extrudeuse (**E**) comporte, en aval de la zone de chauffage-malaxage (**e**), une chambre (**f**) de dégazage pour le mélange.

12. Installation selon la revendications 10 ou 11, caractérisée en ce que l'extrudeuse (**E**) est une extrudeuse bi-vis corotative (**v**_{**1**}**, v**_{**2**}).
